# EUROPEAN PATENT APPLICATION

(11) **EP 2 690 549 A1**
(43) Date of publication of application: **29.01.2014**
(21) Application number: 11861778.6
(22) Date of filing: 23.03.2011
(51) Int. Cl.: G06F 9/38

(54) **ARITHMETIC PROCESSING DEVICE, INFORMATION PROCESSING DEVICE, AND ARITHMETIC PROCESSING METHOD**

(71) Applicant: FUJITSU LIMITED, Kawasaki-shi Kanagawa 211-8588 (JP)
(72) Inventor: SUZUKI, Takashi, Kawasaki-shi Kanagawa 211-8588 (JP)
(74) Representative: Schultes, Stephan
(86) International application number: PCT/JP2011/057051
(87) International publication number: WO 2012/127666

(57) **Abstract**

A CPU as a processor implements a first GHR that indicates, in time series, results which have predicted validity or invalidity of branches when instructions have been fetched, in addition to a second GHR that indicates, in time series, results which have decided validity or invalidity of branches when computation has been completed. When the instructions are fetched, a branch prediction unit in the CPU executes branch prediction by using a branch validity accuracy which are decided based on not only a branch history (BRHIS) but also the instruction fetch address and the first GHR and indicates whether the instruction is a branch direction as expected. When it is decided that the branch prediction has failed based on the result of the branch computation, a branch history update unit in the CPU copies the value of the second GHR to the first GHR. Then, an instruction fetch controller re-executes the instruction fetch.

## Description

### FIELD

The present invention relates to a processor, an information processing device, and a control method of a processor.

### BACKGROUND

A processor having a pipeline function is equipped with a branch prediction unit, in order to make possible speculative execution of a branch target (a branch target instruction) and to exhibit performance to the utmost. The branch prediction unit predicts whether a branch about the branch instruction is valid, in order to advance instruction processing by the speculative execution. If the branch prediction fails, all processing of the pipeline which has been advanced based on a result of the branch prediction and has been speculatively executed is canceled, and then processing of a right branch target is executed again. Therefore, the failure of the branch prediction reduces the performance of the processor. For this reason, especially, the improvement of a branch prediction accuracy is important in achieving the performance enhancement of the processor.

As one form of the branch prediction, there is known a system that predicts a branch target address, and validity or invalidity of the branch in the branch instruction which executes fetch, by holding as a branch history the target address of the branch instruction in which the branch was valid in the past, and searching the branch history in parallel to instruction fetch by using an index which is an address used for the instruction fetch.

Also, as another form of the branch prediction, there is known a second system that uses, for the branch prediction, a pattern of the validity or invalidity of the branch instruction which is executed before the branch instruction to be predicted. Since the branch prediction can be executed according to a situation by holding a validity accuracy of the branch instruction for each pattern of the validity or invalidity of the latest branch instruction, it is possible to acquire high branch prediction accuracy. For example, in the second system, the validity accuracy of the branch instruction, such as a case where the branch instruction immediately after moving from a certain routine in a program to another routine becomes easily invalid, or a case where the branch instruction becomes easily valid when the same branch instruction is again executed within the same routine, is reflected in the branch prediction.

Also, as one example of the second system, there is known a Gshare system that determines the validity or invalidity of the branch instruction by searching the branch history by using an index which is exclusive logical addition of an instruction fetch address and a global history indicating the validity or invalidity of the latest branch instruction according to time series, and that predicts the branch target address. In the system, the branch validity accuracy and the target address of the branch instruction are held as the branch history.

### PRIOR ART DOCUMENT

### PATENT DOCUMENT

Patent Document 1: Japanese Laid-open Patent Publication No. 6-089173

### NON-PATENT DOCUMENT

Non-Patent Document 1: Scott McFarling, "Combining Branch Predictors", WRL Technical Note TN-36, June 1993
Non-Patent Document 2: E. Sprangle, R. Chappell, M. Alsup & Y. Patt, "The Agree Predictor: A Mechanism for Reducing Negative Branch History Interference,", Jun. 1997, pp. 284-291.

### DISCLOSURE OF THE INVENTION

### PROBLEMS TO BE SOLVED BY THE INVENTION

By the way, in the above-mentioned first system, the time necessary for prediction decision of the branch target is shortened, and hence useless instruction fetch at the time of the branch validity can be deleted. However, information on the pattern of the validity or invalidity of the branch instruction which is executed before the branch instruction to be predicted, is not used for the branch prediction, and therefore the accuracy of the branch prediction is insufficient.

On the contrary, it is possible to acquire comparatively high branch prediction accuracy in the above-mentioned Gshare system. However, in the Gshare system, after branch computation is executed, the validity or invalidity of the latest branch instruction is decided. When the branch prediction is executed after the result of the latest branch instruction is decided, the time necessary for the prediction decision of the branch target becomes long. For this reason, when the branch prediction deviates, unnecessary instruction fetch increases, and necessary information on a cache is overwritten, so that there is a fault that the probability that a cache mistake occurs becomes high.

In view of the above described problem, it is an object to provide a processor, an information processing device, and a control method of a processor that can execute branch prediction with a high accuracy at the time of instruction fetch.

### MEANS FOR SOLVING THE PROBLEMS

In order to achieve the above-mentioned object, a processor disclosed herein, includes: an execution means that decides an instruction fetch address and executes instruction fetch; a branch prediction means including: a first global history register that holds information indicating, in time series, results which have predicted validity or invalidity of branches when instructions have been fetched; a branch history table that holds a branch target address and classification information of a branch instruction whose branch was valid in the past, as an entry; a pattern history table that holds a branch validity accuracy as an entry, the branch validity accuracy indicating whether an instruction corresponding to the instruction fetch address is a branch direction as expected; and a predictor that executes the branch prediction of the instruction corresponding to the instruction fetch address based on classification information and the branch validity accuracy, the classification information being searched with the instruction fetch address as an index, from the branch history table, and the branch validity accuracy being searched with information on the instruction fetch address and the first global history register as an index, from the pattern history table; and an update means that includes a second global history register that holds information indicating, in time series, results which have decided validity or invalidity of branches when branch computation has been completed, the update means updating the first global history register with information of the second global history register when it is decided that the branch prediction by the predictor has failed based on the result of the branch computation; wherein the execution means re-executes the instruction fetch after the first global history register is updated.

In order to achieve the above-mentioned object, a control method of a processor that includes: a first global history register that holds information indicating, in time series, results which have predicted validity or invalidity of branches when instructions have been fetched; a branch history table that holds a branch target address and classification information of a branch instruction whose branch was valid in the past, as an entry; a pattern history table that holds a branch validity accuracy as an entry, the branch validity accuracy indicating whether an instruction corresponding to an instruction fetch address is a branch direction as expected; and a second global history register that holds information indicating, in time series, results which have decided validity or invalidity of branches when branch computation has been completed, the control method of a processor disclosed herein includes: a first step that decides the instruction fetch address and executes instruction fetch; a second step that executes the branch prediction of the instruction corresponding to the instruction fetch address based on classification information and the branch validity accuracy, the classification information being searched with the instruction fetch address as an index, from the branch history table, and the branch validity accuracy being searched with information on the instruction fetch address and the first global history register as an index, from the pattern history table; a third step that updates the first global history register with information of the second global history register when it is decided that the branch prediction by the second step has failed based on the result of the branch computation; and a fourth step that re-executes the instruction fetch after the first global history register is updated.

In order to achieve the above-mentioned object, an information processing device disclosed herein includes: a processor; and a memory that is connected to the processor, the memory storing data corresponding to an instruction fetch address fetched by the processor; the processor including: an execution means that decides the instruction fetch address and executes instruction fetch; a branch prediction means including: a first global history register that holds information indicating, in time series, results which have predicted validity or invalidity of branches when instructions have been fetched; a branch history table that holds a branch target address and classification information of a branch instruction whose branch was valid in the past, as an entry; a pattern history table that holds a branch validity accuracy as an entry, the branch validity accuracy indicating whether an instruction corresponding to the instruction fetch address is a branch direction as expected; and a predictor that executes the branch prediction of the instruction corresponding to the instruction fetch address based on classification information and the branch validity accuracy, the classification information being searched with the instruction fetch address as an index, from the branch history table, and the branch validity accuracy being searched with information on the instruction fetch address and the first global history register as an index, from the pattern history table; and a branch computation means that reads out the data from the memory and executes branch computation; an update means that includes a second global history register that holds information indicating, in time series, results which have decided validity or invalidity of branches when branch computation has been completed, the update means updating the first global history register with information of the second global history register when it is decided that the branch prediction by the predictor has failed based on the result of the branch computation by the computation unit; wherein the execution means re-executes the instruction fetch after the first global history register is updated.

### EFFECTS OF THE INVENTION

A processor, an information processing device, and a control method of a processor described herein can execute branch prediction with a high accuracy at the time of instruction fetch. Therefore, it is possible to restrain deviation of the branch prediction and occurrence of the cache mistake by unnecessary instruction fetch, and improve the performance of a processor.

### BRIEF DESCRIPTION OF DRAWINGS

FIG. 1 is a schematic block diagram of an information processing device according to a present embodiment;
FIG. 2 is a schematic block diagram of a CPU 2A;
FIG. 3 is a schematic block diagram of a branch prediction unit 12;
FIG. 4 is a diagram illustrating an example of data structure of an entry in a BRHIS 102;
FIG. 5 is a diagram illustrating an example of data structure of an entry in a PHT 103;
FIG. 6 is a flowchart illustrating the operation of the branch prediction unit 12;
FIG. 7 is a schematic block diagram of a branch history update unit 24;
FIG. 8 is a flowchart illustrating the operation of the branch history update unit 24; and
FIG. 9 is a diagram illustrating a transition pattern of branch validity accuracy denoted by 2-bit BP (Branch Pattern) information.

### DESCRIPTION OF EMBODIMENTS

A description will now be given, with reference to the accompanying drawings, of an embodiment of the present invention.

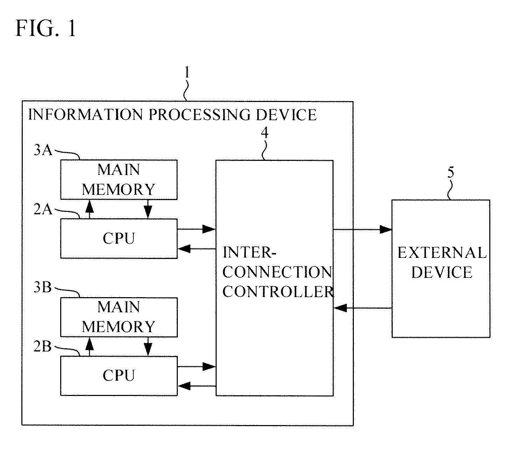

FIG. 1 is a schematic block diagram of an information processing device according to a present embodiment. In FIG. 1, an information processing device 1 is a server as the information processing device, for example. The information processing device 1 includes CPUs (Central Processing Units) 2A and 2B as processors, and main memories 3A and 3B as storage devices, and an interconnection controller 4. The CPUs 2A and 2B are connected to the main memories 3A and 3B, respectively, and read out instruction codes and data stored in the main memories 3A and 3B. The interconnection controller 4 performs input-output control of data between the CPUs 2A and 2B, and an external device 5. Here, the numbers of CPUs and main memories are limited to two.

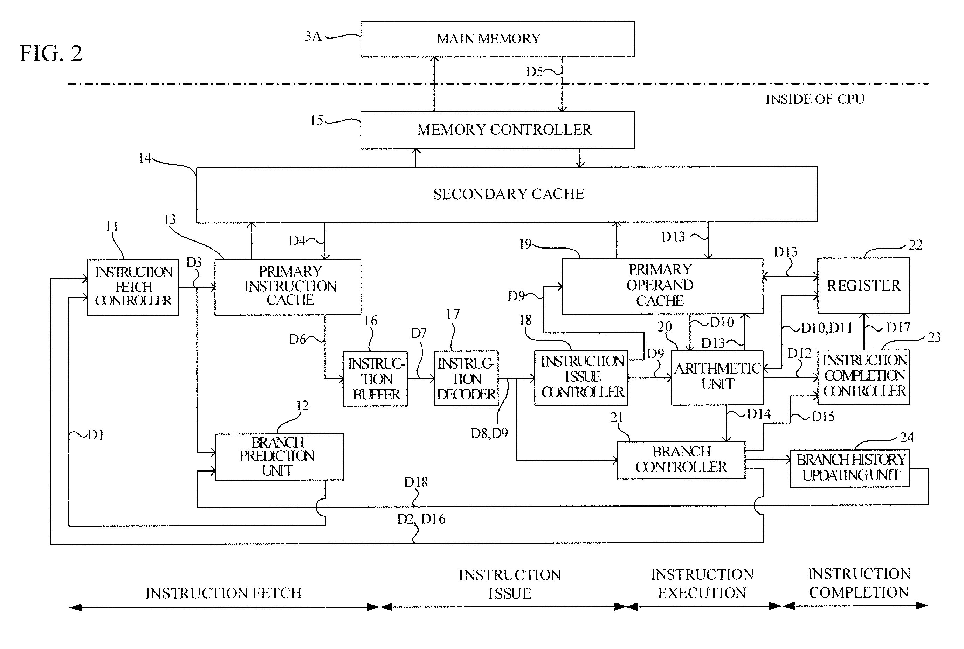

FIG. 2 is a schematic block diagram of the CPU 2A. Since the configuration of the CPU 2B is the same as that of the CPU 2A, a description thereof is omitted.

The CPU 2A is a general-purpose processor having a function of out-of-order execution (i.e., executing a plurality of instructions having no dependence relation according to an executable order regardless of an appearance order in a program) and a pipeline function. The CPU2A is equipped with hardware which operates on a total of four stages, e.g. an instruction fetch stage, an instruction issue stage, an instruction execution stage, and an instruction completion stage, respectively, for example. Specifically, the CPU 2A includes an instruction fetch controller 11 (an execution means), a branch prediction unit 12 (a branch prediction means), a primary instruction cache 13, a secondary cache 14, a memory controller 15, an instruction buffer 16, an instruction decoder 17, an instruction issue controller 18, and a primary operand cache (a primary data cache) 19. In addition, the CPU 2A includes an arithmetic unit 20 (a branch computation means), a branch controller 21, a register 22, an instruction completion controller 23, and a branch history updating unit 24 (an update means).

In the instruction fetch stage, the instruction fetch controller 11, branch prediction unit 12, the primary instruction cache 13, the secondary cache 14, the instruction buffer 16 and so on operate.

The instruction fetch controller 11 receives a prediction branch target address of an instruction fetched from the branch prediction unit 12, and a branch target address decided by branch computation from the branch controller 21 (D1 and D2 in FIG. 2). The instruction fetch controller 11 decides a next instruction fetch address from the prediction branch target address, the decided branch target address, a next instruction address that follows an instruction to be fetched in the case of unbranching, and so on. The instruction fetch controller 11 outputs the decided instruction fetch address to the primary instruction cache 13 (D3 in FIG. 2), and fetches an instruction code from a corresponding address. When the instruction code of the corresponding address does not exist in the primary instruction cache 13 (i.e., when a primary cache miss occurs), the instruction fetch controller 11 fetches the instruction code of the corresponding address from the secondary cache 14 (D4 in FIG. 2). Moreover, when the instruction code of the corresponding address does not exist in the secondary cache 14 (i.e., when a secondary cache miss occurs), the instruction fetch controller 11 fetches the instruction code of the corresponding address from the main memory 3A (D5 in FIG. 2). Here, the primary instruction cache 13 stores a part of instruction codes included in the secondary cache 14, and the secondary cache 14 stores a part of data and instruction codes included in the main memory 3A. In the present embodiment, since the main memory 3A is disposed outside the CPU 2A, the input-output control to the main memory 3A is performed via the memory controller 15. The instruction code fetched from the corresponding address of the primary instruction cache 13, the secondary cache 14 or the main memory 3Ais stored into the instruction buffer 16 (D6 in FIG. 2).

The branch prediction unit 12 executes the branch prediction in parallel to the instruction being fetched. The branch prediction unit 12 executes the branch prediction based on the instruction fetch address received from the instruction fetch controller 11, and returns a branch direction indicating the validity or invalidity of the branch and the branch target address to the instruction fetch controller 11 (D1 in FIG. 2). When a predicted branch direction is validity, the instruction fetch controller 11 selects the branch target address predicted as the next instruction fetch address.

In the instruction issue stage, the instruction decoder 17 and the instruction issue controller 18 operate. The instruction decoder 17 receives the instruction code from the instruction buffer 16 (D7 in FIG. 2), analyzes the classification of the instruction and necessary execution resources, and outputs the result of the analysis to the instruction issue controller 18 (D8 in FIG. 2).

In order to achieve the out-of-order function, the instruction issue controller 18 has a mechanism of a reservation station that once holds the instructions interpreted by the instruction decoder 17, and issues an executable instruction to the execution resources. For this reason, until the instruction can be executed with the execution resources, the instruction issue controller 18 also plays a role of a buffer holding the instruction. The execution resources here are the primary operand cache 19, the arithmetic unit20, the branch controller 21, and so on. The instruction issue controller 18 refers to dependence of the register or the like referred to by the instruction, and determines whether the execution resources can execute the held instruction from an updating situation of the register with the dependence, and the execution situation of the instruction using the same execution resources. When the instruction issue controller 18 determines that the execution resources can execute the held instruction, the instruction issue controller 18 outputs information necessary for the execution of the instruction, such as a register number and an operand address, to the execution resources (D9 in FIG. 2).

In the instruction execution stage, the primary operand cache 19, the arithmetic unit 20, the branch controller 21 and so on operate. The arithmetic unit 20 receives data from the register 22 or the primary operand cache 19 if needed (D10 in FIG. 2), and performs computation corresponding to an instruction, such as four arithmetic operation, logical operation, trigonometric function operation, and address computation, and outputs the result of the computation to the register 22 and the primary operand cache 19 (D11 in FIG. 2). The arithmetic unit 20 outputs a completion notice of the instruction execution to the instruction completion controller 23 (D12 in FIG. 2).

The primary operand cache 19 stores a part of data in the secondary cache 14. In addition, the primary operand cache 19 loads data which is transmitted from the main memory 3A to the arithmetic unit 20 or the register 22 according to a load instruction from the instruction issue controller 18, and stores data which is transmitted from the arithmetic unit 20 or the register 22 to the main memory 3A according to a store instruction from the instruction issue controller 18 (D13 in FIG. 2).

The branch controller 21 receives classification information of the branch instruction from the instruction decoder 17, and receives the branch target address and the result of the computation from the arithmetic unit 20 (D14 in FIG. 2). Then, the branch controller 21 determines whether the result of the computation received from the arithmetic unit 20 meets a branch condition, and decide the branch direction. When the result of the computation received from the arithmetic unit 20 meets the branch condition, the branch controller 21 determines to be the branch validity. When the result of the computation received from the arithmetic unit 20 does not meet the branch condition, the branch controller 21 determines to be branch invalidity. Moreover, the branch controller 21 determines whether the result of the computation received from the arithmetic unit 20 is identical with the branch address and the branch direction of the branch prediction, and controls an order relation between the branch instructions. When a branch address and a branch direction on the basis of the result of the computation received from the arithmetic unit 20 are identical with the branch address and the branch direction of the branch prediction, the branch controller 21 outputs a completion notice of the branch instruction to the instruction completion controller 23 (D15 in FIG. 2). When the branch address and the branch direction on the basis of the result of the computation received from the arithmetic unit 20 are not identical with the branch address and the branch direction of the branch prediction, the branch prediction is failure. Therefore, the branch controller 21 outputs a completion notice of the branch instruction to the instruction completion controller 23 (D15 in FIG. 2), outputs a cancel request of a subsequent instruction which has been fetched already and in which the speculative execution has been performed, and outputs again an instruction fetch request for the branch address on the basis of the result of the computation received from the arithmetic unit 20 (D16 in FIG. 2).

In the instruction completion stage, the register 22, the instruction completion controller 23, the branch history updating unit 24 and so on operate. The instruction completion controller 23 executes an instruction completion process according to an order of instruction codes stored into commit stack entries, not shown, based on the completion notice received from the arithmetic unit 20 and the branch controller 21, and outputs an update instruction of the register 22 (D17 in FIG. 2). The commit stack entries are provided in the instruction completion controller 23, and are buffers used for the monitoring of the progress of the instruction under execution. In commit stack entries, one entry is assigned for each instruction.

When the register 22 receives a register update instruction from the instruction completion controller 23, the register 22 updates data held in the register 22 on the basis of data of the result of the computation received from the arithmetic unit 20 and the primary operand cache 19. The branch history updating unit 24 generates history update data of the branch prediction unit 12 on the basis of the result of the branch computation received from the branch controller 21. The branch history updating unit 24 outputs the generated history update data to the branch prediction unit 12 (D18 in FIG. 2), and updates a branch history holder described later, which is included in the branch prediction unit 12.

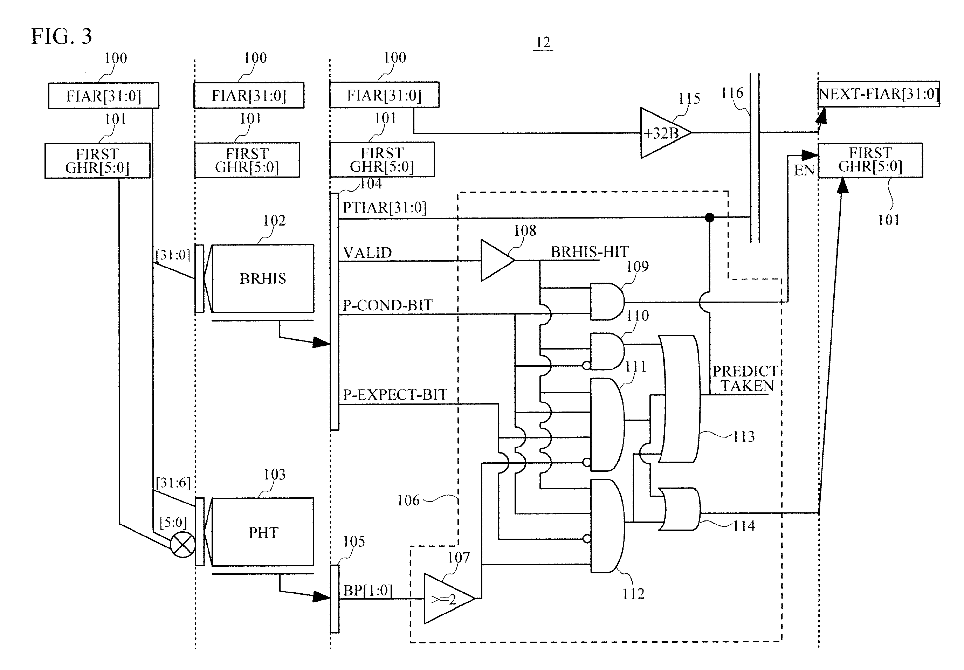

FIG. 3 is a schematic block diagram of the branch prediction unit 12. In FIG. 3, broken lines in a vertical direction indicate execution stages having different timing. In FIG. 3, as one example, an instruction fetch address FAIR (Fetched Instruction AddRess) 100 which the branch prediction unit 12 receives from the instruction fetch controller 11 is composed of 32 bits. In FIG. 3, the instruction fetch address FAIR 100 is mentioned as FAIR , and the indicates a total of 32 bits composed from a zeroth bit to a 31 th bit.

The branch prediction unit 12 includes: a first GHR (Global History Register) 101 that is a branch validity information holder which indicates, in time series, results which have predicted validity or invalidity of branches when instructions are fetched; a BRHIS (BRanch HIStory table) 102 that is a branch history holder which stores classification information and a branch target address of the branch instruction whose branch was valid in the past; a PHT (Pattern History Table) 103 that is a branch accuracy information holder which stores information on the branch validity accuracy of the instruction corresponding to the exclusive logical addition (OR) of the first GHR101 and the instruction fetch address 100; and a branch prediction circuit unit 106 (a predictor). In FIG. 3, the first GHR 101 is composed of 6 bits.

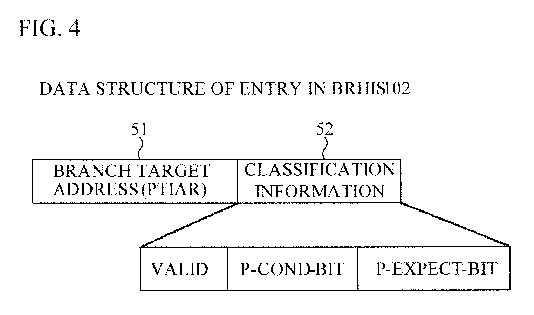

FIG. 4 is a diagram illustrating an example of data structure of each entry in the BRHIS 102.

Each entry of the BRHIS 102 includes a branch target address PTIAR (Predicted Target Instruction AddRess) 51 and classification information 52 of the branch instruction whose branch was valid in the past, as illustrated in FIG. 4. The classification information 52 includes: a VALID field which indicates by "1" that the branch of the instruction corresponding to the instruction fetch address was valid in the past, and by "0" that the branch was invalid in the past; a P-COND-BIT field which indicates by "1" that the instruction corresponding to the instruction fetch address was conditional branch, and by "0" that the instruction was unconditional branch; and a P-EXPECT- BIT field which indicates by "1" that the instruction corresponding to the instruction fetch address was a branch instruction expecting the branch validity, and by "0" that the instruction was a branch instruction expecting the branch invalidity. Each of the VALID field, the P-COND-BIT field, and the P-EXPECT- BIT field has one bit of "0" or "1", for example.

Returning to FIG. 3, the BRHIS 102 is searched with the instruction fetch address FIAR in parallel to the instruction being fetched, and outputs information of a corresponding entry (i.e., the branch target address PTIAR, the VALID, the P-COND-BIT, and the P-EXPECT- BIT) to a register 104 of FIG. 3. The register 104 outputs the information of the matched entry in the BRHIS 102 to the branch prediction circuit unit 106.

A system called "Agree-prediction" is known as an index which indicates the branch validity accuracy stored in the PHT 103. The Agree-prediction system indicates the branch validity accuracy by whether the branch instruction is the branch direction as expected. It is considered to add information which expects the branch validity to the branch instruction beforehand judged with a compiler that the accuracy of branch validity is high, as an example of the instruction which expects the branch validity.

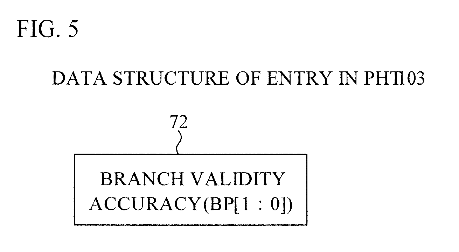

In the present embodiment, the branch validity accuracy indicating whether the branch instruction is the branch direction as expected is represented as two-bit BP (Branch Pattern) information which is any one value of "00", "01", 10" and "11". As illustrated in FIG. 5, the PHT 103 holds the branch validity accuracy 72 represented by the two-bit BP [1:0] as an entry. At the time of the branch prediction, the PHT 103 is searched with a coupling address, as an index, which has coupled the instruction fetch address with exclusive OR of the instruction fetch address [5:0] and the first GHR101 [5:0] in parallel to the instruction being fetched, and outputs BP [1:0] of a corresponding entry (i.e., the branch validity accuracy 72) to a register 105. The register 105 outputs the BP [1:0] of the matched entry in the PHT 103 to the branch prediction circuit unit 106. Here, the reason for employing the exclusive OR of the instruction fetch address FIAR [5:0] and the first GHR [5:0] is that the size of the PHT 103 is limited, and is to improve the utilization efficiency of the history. For example, in a branch in which the instruction fetch address is "111111" and the first GHR is "000000" (these are represented by binary number), and a branch in which the instruction fetch address is "111110" and the first GHR is "000001", the exclusive OR is mutually "111111 ". Therefore, plural branches can share and use each entry in the PHT 103.

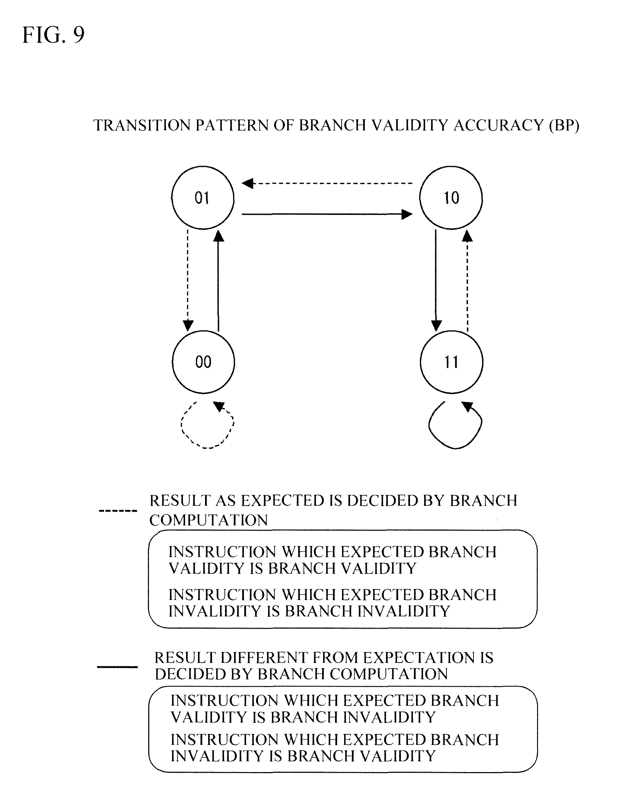

FIG. 9 is a diagram illustrating a transition pattern of the branch validity accuracy BP [1:0] denoted by the 2-bit BP information. When a value of the BP [1:0] from the PHT 103 is "00" or "01" which is less than "10", this means that there is a possibility that the validity or the invalidity of the branch is as expected. Specifically, when the value of the BP [1:0] is "00", this means that the possibility that the validity or the invalidity of the branch is as expected is in a high state. When the value of the BP [1:0] is "01", this means that the possibility that the validity or the invalidity of the branch is as expected is in a low state. On the other hand, when the value of the BP [1:0] from the PHT 103 is "10" or "11" which is equal to or more than "10", this means that there is a possibility that the validity or the invalidity of the branch is not as expected. Specifically, when the value of the BP [1:0] is "11", this means that the possibility that the validity or the invalidity of the branch is not as expected is in a high state. Specifically, when the value of the BP [1:0] is "10", this means that the possibility that the validity or the invalidity of the branch is not as expected is in a low state.

The two-bit BP [1:0] included in the entry in the PHT 103 is updated whenever the branch computation of the conditional branch is completed, as described later. When a result as expected is decided by the branch computation, the value of the BP [1:0] is reduced by 1, and a corresponding entry is updated. When a result as expected is decided by the branch computation and the value of the BP [1:0] is "00", the value of the BP [1:0] cannot be reduced further, and the corresponding entry is not updated. On the other hand, when a result different from expectation is decided by the branch computation, the value of the BP [1:0] is added by 1, and a corresponding entry is updated. When a result different from expectation is decided by the branch computation and the value of the BP [1:0] is "11", the value of the BP [1:0] cannot be added further, and the corresponding entry is not updated.

Returning to FIG. 3, the branch prediction circuit unit 106 includes a comparison circuit 107, a buffer 108, logical multiplication circuits (AND) 109 to 112, logical addition circuits (OR) 113 and 114. When the inputted BP [1:0] is "00" or "01" which is less than "10", the comparison circuit 107 outputs "0" to the logical multiplication circuits 111 and 112. When the inputted BP [1:0] is "10" or "11" which is equal to or more than "10", the comparison circuit 107 outputs "1" to the logical multiplication circuits 111 and 112.

The buffer 108 inputs a VALID from the register 104, outputs "0" as a BRHIS-HIT when the VALID is "0", and outputs "1" as the BRHIS-HIT when the VALID is "1". The BRHIS-HIT indicates the fetched instruction is the branch instruction. That is, the VALID has the same value as the BRHIS-HIT. When the VALID is "0", this indicates that the fetched instruction is not the branch instruction, and the branch prediction circuit unit 106 predicts the fetched instruction as the branch invalidity. That is, a PREDICT-TAKEN (1 bit) which is outputted from the logical addition circuit 113, and indicates by "1" that the fetched instruction is predicted as the branch validity becomes "0". When the VALID is "1", this indicates that the fetched instruction is the branch instruction.

When the BRHIS-HIT is "1" and the P-COND-BIT is " 1", the logical multiplication circuit 109 outputs an update indication to the first GHR 101. At this time, the first GHR 101 is updated according to an output value of the logical addition circuit 114. Here, when the BRHIS-HIT is "1" and the P-COND-BIT is "1", this indicates that the fetched instruction is the conditional branch. When the BRHIS-HIT is "1" and the P-COND-BIT is "0", the logical multiplication circuit 110 outputs "1" to the logical addition circuit 113, whereas in other cases, the logical multiplication circuit 110 outputs "0" to the logical addition circuit 113. Here, when the BRHIS-HIT is "1" and the P-COND-BIT is "0", this indicates that the fetched instruction is the unconditional branch.

When the BRHIS-HIT is "1", the P-COND-BIT is "1", the P-EXPECT-BIT is "1" and the BP [1:0] is "00" or "01", the logical multiplication circuit 111 outputs "1" to the logical addition circuits 113 and 114, whereas in other cases, the logical multiplication circuit 111 outputs "0" to the logical addition circuits 113 and 114. Here, when the BRHIS-HIT is "1", the P-COND-BIT is "1", the P-EXPECT-BIT is "1" and the BP [1:0] is "00" or "01", this indicates that the fetched instruction is the conditional branch and is the branch validity as expected by the instruction. When the BRHIS-HIT is "1", the P-COND-BIT is "1", the P-EXPECT-BIT is "0" and the BP [1:0] is "00" or "01", this indicates that the fetched instruction is the conditional branch and is the branch invalidity as expected by the instruction.

When the BRHIS-HIT is "1", the P-COND-BIT is "1", the P-EXPECT-BIT is "0" and the BP [1:0] is "10" or "11", the logical multiplication circuit 112 outputs "1" to the logical addition circuits 113 and 114, whereas in other cases, the logical multiplication circuit 112 outputs "0" to the logical addition circuits 113 and 114. Here, when the BRHIS-HIT is "1", the P-COND-BIT is "1", the P-EXPECT-BIT is "0" and the BP [1:0] is "10" or "11", this indicates that the fetched instruction is the conditional branch and is the branch validity unlike expectation of the instruction. When the BRHIS-HIT is "1", the P-COND-BIT is "1", the P-EXPECT-BIT is "1" and the BP [1:0] is "10" or "11", this indicates that the fetched instruction is the conditional branch and is the branch invalidity unlike expectation of the instruction.

When the output of any one of the logical multiplication circuits 110 to 112 is "1", the logical addition circuit 113 outputs "1" as the PREDICT-TAKEN. That is, when the output of any one of the logical multiplication circuits 110 to 112 is "1", the logical addition circuit 113 predicts the fetched instruction as the branch validity. When the output of all of the logical multiplication circuits 110 to 112 is "0", the logical addition circuit 113 outputs "0" as the PREDICT-TAKEN. That is, when the output of all of the logical multiplication circuits 110 to 112 is "0", the logical addition circuit 113 predicts the fetched instruction as the branch invalidity.

When the output of any one of the logical multiplication circuits 111 and 112 is "1", the logical addition circuit 114 outputs "1" to the first GHR 101. In this case, an update value of the first GHR 101 becomes "1". When the output of all of the logical multiplication circuits 111 and 112 is "1", the logical addition circuit 114 outputs "0" to the first GHR 101. In this case, the update value of the first GHR 101 becomes "0".

The branch prediction unit 12 outputs the PREDICT-TAKEN signal indicating the branch validity and the branch target address PTIAR held in the register 104 to the instruction fetch controller 11. When the PREDICT-TAKEN is "1", a selection circuit 116 selects the branch target address PTIAR outputted from the instruction fetch controller 11 as a next instruction fetch address "NEXT-FIAR ". When the PREDICT-TAKEN is "0", the selection circuit 116 selects an address which follows the instruction fetch address FIAR as the next instruction fetch address. Here, the address which follows the instruction fetch address FIAR is an address to which the instruction fetch address FIAR is added by an address adding circuit 115. For example, when an unit of data fetched at a time is 32 bytes, the address adding circuit 115 adds 32 bytes to the instruction fetch address FIAR .

The first GHR 101 stores six results of the branch prediction which has denoted the branch validity by 1 bit of "1" and the branch invalidity by 1 bit of "0", in time series. The first GHR 101 is updated only when it is predicted that a conditional branch instruction is fetched based on the results of the branch prediction. Specifically, since the case where the BRHIS-HIT is "0" or the P-COND-BIT is "0" indicates that the fetched instruction is not the conditional branch, the first GHR 101 is not updated. Since the case where the BRHIS-HIT is "1" and the P-COND-BIT is "1" indicates that the conditional branch instruction is fetched, the first GHR 101 is updated. When the BRHIS-HIT is "1", the P-COND-BIT is "1", and the PREDICT-TAKEN is "0", the oldest information in the first GHR 101 is deleted and an entry of "0" is added to the first GHR 101. When the BRHIS-HIT is "1", the P-COND-BIT is "1", and the PREDICT-TAKEN is "1", this indicates that it is predicted that the fetched conditional branch instruction is valid, and hence the oldest information in the first GHR 101 is deleted and an entry of "1" is added to the first GHR 101. For example, it is assumed that the first GHR 101 before being updated is "abcdef". Here, it is assumed that each of "a" to "f" indicates a one-bit variable which can become 0 or 1, the rightmost bit "f" is the oldest information, and new information is arranged in a left direction sequentially. When the BRHIS-HIT is "0" or the P-COND-BIT is "0" in this premise, this indicates that it is predicted that the fetched conditional branch instruction is invalid, and hence the first GHR 101 maintains the "abcdef". When the BRHIS-HIT is "1", the P-COND-BIT is "1", and the PREDICT-TAKEN is "0", the first GHR 101 is updated to "0abcde". When the BRHIS-HIT is "1", the P-COND-BIT is "1", and the PREDICT-TAKEN is "1", the first GHR 101 is updated to "1abcde".

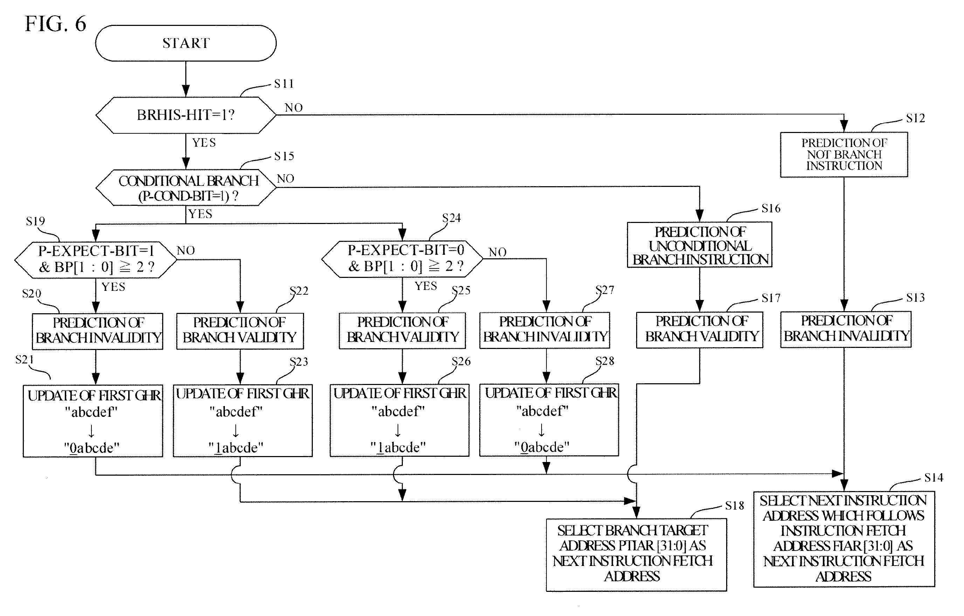

FIG. 6 is a flowchart illustrating the operation of the branch prediction unit 12. Here, as described above, it is assumed that the first GHR 101 before being updated is "abcdef".

The branch prediction unit 12 determines whether the BRHIS-HIT is "1" (step S11). When the BRHIS-HIT is "0" in step S11 (NO), the branch prediction unit 12 predicts that the fetched instruction is not the branch instruction (step S 12), that is, the branch prediction unit 12 predicts the fetched instruction as the branch invalidity, as a result of the branch prediction unit 12 (step S13). In FIG. 3, the output of all of the logical multiplication circuits 109 to 112 becomes "0", so that steps 12 and 13 are realized. The logical addition circuit 113 outputs "0" as the PREDICT-TAKEN. When the fetched instruction is predicted as the branch invalidity, the instruction fetch controller 11 causes the selection circuit 116 to select a next instruction address which follows the instruction fetch address FIAR as the next instruction fetch address (step S14).

When the BRHIS-HIT is "1" in step S11 (YES), the branch prediction unit 12 determines whether the P-COND-BIT is "1" (step S15). When the P-COND-BIT is "0" in step S 15 (NO), the branch prediction unit 12 predicts that the fetched instruction is the unconditional branch instruction (step S16), that is, the branch prediction unit 12 predicts the fetched instruction as the branch validity, as a result of the branch prediction unit 12 (step S17). In FIG. 3, the output of the logical multiplication circuit 110 becomes "1", so that steps 16 and 17 are realized. The logical addition circuit 113 outputs "1" as the PREDICT-TAKEN. When the fetched instruction is predicted as the branch invalidity, the instruction fetch controller 11 causes the selection circuit 116 to select the branch target address PTIAR as the next instruction fetch address (step S18).

When the P-COND-BIT is "1" in step S 15 (YES), the branch prediction unit 12 determines whether the P-EXPECT-BIT is "1" and the BP [1:0] is equal to or more than 2 (i.e., the BP [1:0] is "10" or "11"), or the P-EXPECT-BIT is "1" and the BP [1:0] is less than 2 (i.e., the BP [1:0] is "10" or "11") (step S 19). When the P-EXPECT-BIT is "1" and the BP [1:0] is equal to or more than 2 in step S19, the branch prediction unit 12 predicts the fetched instruction as the branch invalidity, as a result of the branch prediction unit 12 (step S20), and the first GHR 101 is updated to "0abcde" (step S21). Then, step S 14 described above is executed. In FIG. 3, the output of the logical multiplication circuit 109 becomes "1" and the output of all of the logical multiplication circuits 110 to 112 becomes "0", so that steps S20 and S21 are realized. The logical addition circuit 113 outputs "0" as the PREDICT-TAKEN and the logical addition circuit 114 outputs "0" as the update value of the first GHR 101.

When the P-EXPECT-BIT is "1" and the BP [1:0] is less than 2 in step S19, the branch prediction unit 12 predicts the fetched instruction as the branch validity, as a result of the branch prediction unit 12 (step S22), and the first GHR 101 is updated to "1abcde" (step S23). Then, step S 18 described above is executed. In FIG. 3, the output of the logical multiplication circuit 109 becomes "1" and the output of the logical multiplication circuit 111 becomes "1", so that steps S22 and S23 are realized. The logical addition circuit 113 outputs "1" as the PREDICT-TAKEN and the logical addition circuit 114 outputs "1" as the update value of the first GHR 101.

Moreover, when the P-COND-BIT is "1" in step S 15 (YES), the branch prediction unit 12 determines whether the P-EXPECT-BIT is "0" and the BP [1:0] is equal to or more than 2 (i.e., the BP [1:0] is "10" or "11"), or the P-EXPECT-BIT is "0" and the BP [1:0] is less than 2 (i.e., the BP [1:0] is "10" or "11") (step S24). When the P-EXPECT-BIT is "0" and the BP [1:0] is equal to or more than 2 (i.e., the BP [1:0] is "10" or "11") in step S24, the branch prediction unit 12 predicts the fetched instruction as the branch validity, as a result of the branch prediction unit 12 (step S25), and the first GHR 101 is updated to "1abcde" (step S26). Then, step S18 described above is executed. In FIG. 3, the output of the logical multiplication circuit 109 becomes "1" and the output of the logical multiplication circuit 112 becomes "1", so that steps S25 and S26 are realized. The logical addition circuit 113 outputs "1" as the PREDICT-TAKEN and the logical addition circuit 114 outputs "1" as the update value of the first GHR 101.

When the P-EXPECT-BIT is "0" and the BP [1:0] is less than 2 (i.e., the BP [1:0] is "10" or "11") in step S24, the branch prediction unit 12 predicts the fetched instruction as the branch invalidity, as a result of the branch prediction unit 12 (step S27), and the first GHR 101 is updated to "0abcde" (step S28). Then, step S14 described above is executed. In FIG. 3, the output of the logical multiplication circuit 109 becomes "1" and the output of all of the logical multiplication circuits 110 to 112 becomes "0", so that steps S27 and S28 are realized. The logical addition circuit 113 outputs "0" as the PREDICT-TAKEN and the logical addition circuit 114 outputs "0" as the update value of the first GHR 101.

As described above, when the instruction is fetched, the branch prediction unit 12 executes the branch prediction by using not only the branch history but also the branch validity accuracy decided based on the first GHR 101 and the instruction fetch address.

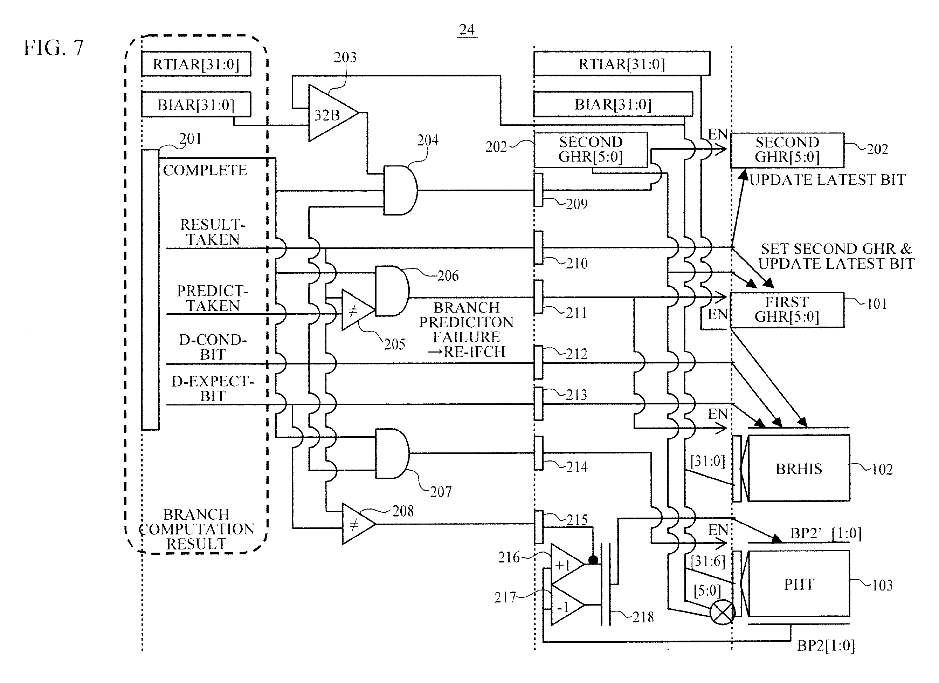

FIG. 7 is a schematic block diagram of the branch history update unit 24. In FIG. 7, broken lines in a vertical direction indicate execution stages having different timing.

The branch history update unit 24 updates the BRHIS 102, the PHT 103, the first GHR 101, and a second GHR 202 described later on the basis of the result of the branch computation. The branch history update unit 24 receives the branch target address RTIAR of the instruction decided on the basis of the result of the computation, and the branch instruction address BIAR (Branch Instruction AddRess) from the branch controller 21 of FIG. 1, as the result of the branch computation. Each of the branch target address RTIAR and the branch instruction address BIAR is composed of 32 bits. The indicates a total of 32 bits composed from a zeroth bit to a 31th bit.

The branch history update unit 24 includes a register 201. The register 201 receives information of a total of 5 bits composed of a COMPLETE, a RESULT-TAKEN, a PREDICT-TAKEN, a D-COND-BIT and a D-EXPECT-BIT. The COMPLETE indicates by "1" that the branch computation was completed, and by "0" that the branch computation was not completed. The RESULT-TAKEN indicates by "1" that the branch validity was decided, and by "0" that the branch invalidity was decided. The PREDICT-TAKEN indicates by "1" that the fetched instruction was predicted as the branch validity when the instruction was fetched, and by "0" that the fetched instruction was predicted as the branch invalidity. The D-COND-BIT indicates by "1" that an instruction is the conditional branch instruction when the instruction is decoded, and by "0" that an instruction is not the conditional branch instruction. The D-EXPECT-BIT indicates by "1" that an instruction expects the branch validity when the instruction is decoded, and by "0" that an instruction expects the branch invalidity.

The branch history update unit 24 further includes the second GHR 202, a determination circuit 203, logical multiplication circuits 204, 206 and 207, comparison circuits 205 and 208, registers 209 to 215, an adder 216, a subtracter 217, and a selection circuit 218. The adder 216, the subtracter 217 and the selection circuit 218 function as an arithmetic means.

The second GHR 202 stores 6-bit results of the branch prediction which has denoted the branch validity by 1 bit of "1" and the branch invalidity by 1 bit of "0", in time series. When the branch computation of the conditional branch instruction has been completed, the second GHR 202 is updated in units of a lump of instruction sequence instruction-fetched at a time (e.g. when a unit of the instruction fetch is expressed by 32 bytes and one instruction is expressed by 32 bits, the unit fetched at a time corresponds to 8 instructions). That is, the branch computation itself is executed for each instruction, and when two or more branch instructions are included in the instruction fetch for example, the second GHR 202 is updated in units of the two or more branch instructions. Therefore, the output of the logical multiplication circuit 204, the RESULT-TAKEN and the output of the logical multiplication circuit 211 in FIG. 7 which correspond to the number of branch instructions included in the instruction fetch are temporarily stored into the registers 209 to 211, respectively. When the branch computation of the conditional branch instruction has been completed, the temporarily stored data are outputted collectively. Updating the second GHR 202 for each instruction fetch is required in order to generate a history equivalent to the first GHR 101.

The determination circuit 203 determines whether the branch instruction address BIAR steps over a boundary of 32 Bytes, i.e., a difference between the branch instruction address and the instruction address of the branch instruction executed just before that exceeds 32 bytes. When the branch instruction address BIAR steps over the boundary of 32 Bytes, the determination circuit 203 outputs "1" to the logical multiplication circuit 204. When the branch instruction address BIAR does not step over the boundary of 32 Bytes, the determination circuit 203 outputs "0" to the logical multiplication circuit 204.

When the COMPLETE is "1" and the D-COND-BIT is "1", the logical multiplication circuit 204 outputs an update indication to the second GHR 202 via the register 209. When the branch instruction address BIAR steps over the boundary of 32 Bytes, the COMPLETE is "1", the D-COND-BIT is "1" and the RESULT-TAKEN is "0" for example, the oldest information in the second GHR 202 is deleted and an entry of "0" is added to the second GHR 202. When the branch instruction address BIAR steps over the boundary of 32 Bytes, the COMPLETE is "1", the D-COND-BIT is "1" and the RESULT-TAKEN is "1", the oldest information in the second GHR 202 is deleted and an entry of "1" is added to the second GHR 202. When the branch instruction address BIAR does not step over the boundary of 32 Bytes, the COMPLETE is "1" and the D-COND-BIT is "1", the second GHR 202 is updated to the logical addition of the latest information in the second GHR 202 and the RESULT-TAKEN.

For example, it is assumed that the second GHR 202 before being updated is "abcdef". Here, it is assumed that each of "a" to "f" indicates a one-bit variable which can become 0 or 1, the rightmost bit "f" is the oldest information, and new information is arranged in a left direction sequentially. When the branch instruction address BIAR steps over the boundary of 32 Bytes, the COMPLETE is "1", the D-COND-BIT is "1" and the RESULT-TAKEN is "0", the second GHR 202 is updated to "0abcde". When the branch instruction address BIAR does not step over the boundary of 32 Bytes, the COMPLETE is "1", the D-COND-BIT is "1" and the RESULT-TAKEN is "1", the second GHR 202 is updated to "1bcdef". When the branch instruction address BIAR does not step over the boundary of 32 Bytes, the COMPLETE is "1", the D-COND-BIT is "1" and the RESULT-TAKEN is "0", the second GHR 202 maintains "abcdef".

The comparison circuit 205 determines whether the PREDICT-TAKEN is in disagreement with the RESULT-TAKEN. When the PREDICT-TAKEN is in disagreement with the RESULT-TAKEN, the comparison circuit 205 outputs "1" to the logical multiplication circuit 206. On the other hand, when the PREDICT-TAKEN is in agreement with the RESULT-TAKEN, the comparison circuit 205 outputs "0" to the logical multiplication circuit 206. When the COMPLETE is "1" and the output of the comparison circuit 205 is "1" (i.e., the PREDICT-TAKEN ≠ the RESULT-TAKEN), the logical multiplication circuit 206 determines that the branch prediction has failed, and outputs an update indication of the first GHR 101 and the BRHIS 102 to the first GHR 101 and the BRHIS 102 via the register 211. The updating of the first GHR 101 and the BRHIS 102 is described later.

When the COMPLETE is "1" and the D-COND-BIT is "1", the logical multiplication circuit 207 outputs an update indication to the PHT 103 via the register 214. When the comparison circuit 208 determines whether the D-EXPECT-BIT is in disagreement with the RESULT-TAKEN. When the D-EXPECT-BIT is in disagreement with the RESULT-TAKEN, the comparison circuit 208 outputs "1" indicating the selection of the adder 216 to the selection circuit 218 via the register 215. Here, when the D-EXPECT-BIT is in disagreement with the RESULT-TAKEN, this indicates that the computation result of the branch is not as expected. When the D-EXPECT-BIT is in agreement with the RESULT-TAKEN, the comparison circuit 208 outputs "0" indicating the selection of the subtracter 217 to the selection circuit 218 via the buffer 215. Here, when the D-EXPECT-BIT is identical with the RESULT-TAKEN, this indicates that the computation result of the branch is as expected.

The updating of the PHT 103 is executed whenever the branch computation of the conditional branch is completed. An update address of the PHT 103 is an address which has coupled an address BIAR of the branch instruction in which the computation has been completed, with exclusive OR of an address BIAR [5:0] and the second GHR202 ([5:0]). Here, since an entry to be updated is used in order to search the PHT 103 when the branch prediction concerning the same instruction is executed later, the computation result before the fetched instruction is required. Therefore, the computation result of the instruction itself to be targeted is not reflected in the update address, i.e., the second GHR 202 before being updated by the computation result of the branch instruction to be targeted is used.

Here, the output (namely, branch validity accuracy) of the PHT 103 at the time of updating is defined as a BP2 [1:0], in order to indicate an output caused by an index different from an index of the branch prediction. In the updating of the PHT 103, the BP2 [1:0] of the entry corresponding to the update address is read from the PHT 103 once. When the computation result of the branch is as expected (i.e., the RESULT-TAKEN is identical with the D-EXPECT-BIT), the BP2 [1:0] is subtracted by 1 by the subtracter 217. On the other hand, when the computation result of the branch is not as expected (i.e., the RESULT-TAKEN is in disagreement with the D-EXPECT-BIT), the BP2 [1:0] is added by 1 by the adder 216. The added BP2 [1:0] or the subtracted BP2 [1:0] is written into an entry corresponding to the update address identical with the update address of the readout time via the selection circuit 218, as the update address BP2' [1:0]. More specifically, when the COMPLETE is "1", the D-COND-BIT is "1" and the RESULT-TAKEN is in agreement with the D-EXPECT-BIT, the BP2' [1:0] of an entry to be updated in the PHT 103 is updated as "BP2' = BP2 [1:0] - 1" via the subtracter 217 and the selection circuit 218. At this time, when the BP2 [1:0] is "00", the subtraction cannot be executed additionally, and hence the value of the BP2'[1:0] is not updated. When the COMPLETE is "1", the D-COND-BIT is "1" and the RESULT-TAKEN is in disagreement with the D-EXPECT-BIT, the BP2' [1:0] of the entry of the updating target in the PHT 103 is updated as "BP2' = BP2 [1:0] + 1" via the adder 216 and the selection circuit 218. At this time, when the BP2 [1:0] is "11", the addition cannot be executed additionally, and hence the value of the BP2'[1:0] is not updated. Thus, the adder 216, the subtracter 217 and the selection circuit 218 can update the branch validity accuracy included in the entry in the PHT 103 according to the computation result of the branch.

Next, a description will be given of the updating of the first GHR 101 and the BRHIS 102.

When in the logical multiplication circuit 206, the COMPLETE is "1", and the RESULT-TAKEN is in disagreement with the PREDICT-TAKEN, this indicates that the branch prediction has failed. When the branch prediction has failed, all processing of the subsequent instruction which already has been fetched and has performed the speculative execution is canceled, and the processing is redone from fetch of an instruction subsequent to the instruction in which the prediction has failed based on the result of correct branch computation. At his time, the first GHR 101 and the BRHIS 102 are updated based on the result of the correct branch computation.

Specifically, the update address of the BRHIS 102 is the address BIAR of the instruction which has failed in the branch prediction. When the branch prediction has failed, the RTIAR , the D-COND-BIT and the D-EXPECT-BIT which are the decided information of the branch instruction are registered into the entry of the updating target in the BRHIS 102, as the RTIAR , the D-COND-BIT and the D-EXPECT-BIT, respectively. Moreover, the VALID of the entry of the updating target in the BRHIS 102 is set to "1".

When the branch prediction has failed, a value of the second GHR 202 which has reflected the computation result of the branch instruction which has failed in the branch prediction is set to the first GHR 101. Thereby, the value which the branch computation has decided is reflected in the first GHR 101, so that the subsequent branch prediction is executed on the basis of the value.

Thus, since at the time of a second instruction fetch, the first GHR 101 and the BRHIS 102 are updated by the value after the branch is decided, it is always possible to execute the branch prediction in a state where there is no gap between the values of the instruction fetch and the branch decision.

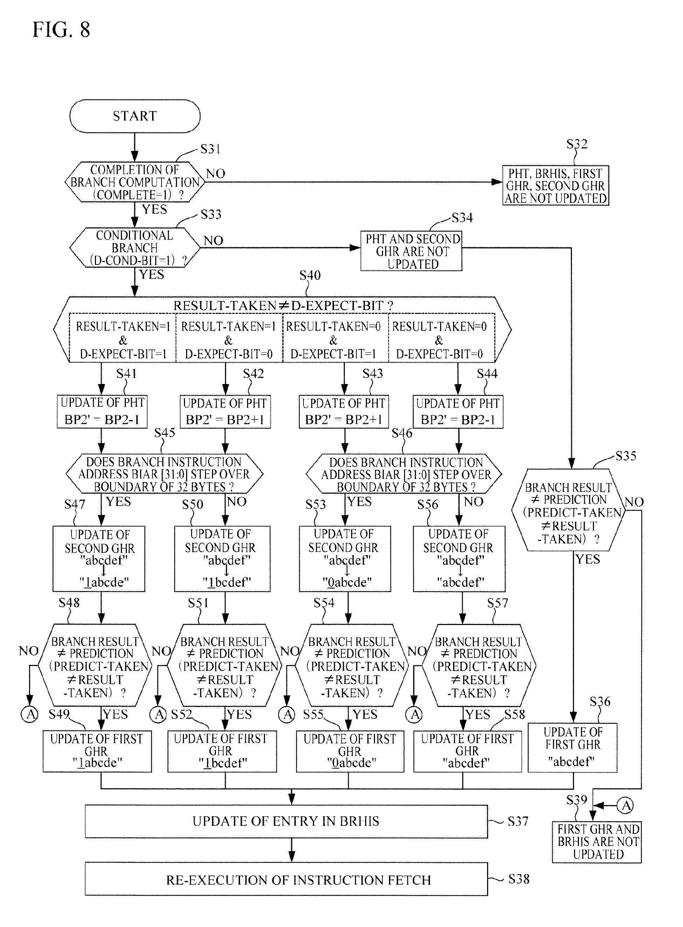

FIG. 8 is a flowchart illustrating the operation of the branch history update unit 24. Here, as described above, it is assumed that the second GHR 202 before being updated is "abcdef".

First, the branch history update unit 24 determines whether the COMPLETE is "1", i.e., the branch computation is completed (step S31). When the branch computation is completed in step S31 (NO), the first GHR 101, the BRHIS 102, the PHT 103 and the second GHR 202 are not updated (step S32). In FIG. 7, the output of all the logical multiplication circuits 204, 206 and 207 becomes "0", so that steps S31 and S32 are realized.

Next, when the branch computation is completed in step S31 (YES), the branch history update unit 24 determines whether the D-COND-BIT is "1", i.e., the instruction is the conditional branch (step S33).

When the instruction is not the conditional branch in step S33 (NO), the PHT 103 and the second GHR 202 are not updated (step S34). Next, the branch history update unit 24 determines whether the PREDICT-TAKEN is in disagreement with the RESULT-TAKEN, i.e., the result of the validity or the invalidity of the decided branch differs from the prediction (step S35). When the result of the validity or the invalidity of the decided branch differs from the prediction in step S35 (YES), the first GHR 101 is updated with the value "abcdef" of the second GHR 202 before being updated (step S36). Then, the entry of the updating target in the BRHIS 102 is updated (step S37), and the instruction fetch is executed again (step S38). In FIG. 7, the output of the logical multiplication circuits 204 and 207 becomes "1", the output of the comparison circuit 205 becomes "1" and the output of the logical multiplication circuit 206 becomes "1", so that steps S37 and S38 are realized. On the other hand, when the result of the validity or the invalidity of the decided branch is identical with the prediction in step S35 (NO), the first GHR 101 and the second GHR 102 are not updated (step S39). In FIG. 7, the output of the logical multiplication circuits 204 and 207 becomes "0" and the output of the comparison circuit 205 becomes "0", so that step S39 is realized.

When the instruction is the conditional branch in above-mentioned step S33 (YES), the branch history update unit 24 determines whether the PREDICT-TAKEN is in disagreement with the D-EXPECT-BIT, i.e., the result of the validity or the invalidity of the decided branch is in disagreement with an expectation value of the branch validity or the branch invalidity of the decoded instruction (step S40). In FIG. 7, the comparison circuit 208 determines the combination of a value of the RESULT-TAKEN (0 or 1) and a value of the D-EXPECT-BIT (0 or 1), so that step S40 is realized.

When the RESULT-TAKEN is in agreement with the D-EXPECT-BIT in step S40 (i.e., the RESULT-TAKEN is "1" and the D-EXPECT-BIT is "1" or the RESULT-TAKEN is "0" and the D-EXPECT-BIT is "0"), the BP2' [1:0] of the entry of the updating target in the PHT 103 is updated as "BP2' = BP2 [1:0] - 1" (steps S41 and 44). On the other hand, when the RESULT-TAKEN is in disagreement with the D-EXPECT-BIT in step S40 (i.e., the RESULT-TAKEN is "1" and the D-EXPECT-BIT is "0" or the RESULT-TAKEN is "0" and the D-EXPECT-BIT is "1"), the BP2' [1:0] of the entry of the updating target in the PHT 103 is updated as "BP2' = BP2 [1:0] + 1" (steps S42 and 43).

Next, the branch history update unit 24 determines whether the branch instruction address BIAR steps over the boundary of 32 Bytes (steps S45 and 46).

When the branch instruction address BIAR steps over the boundary of 32 Bytes in step S45 (YES), and the RESULT-TAKEN is "1", the second GHR 202 is updated to "1abcde" (step S47). Then, the branch history update unit 24 determines whether the PREDICT-TAKEN is in disagreement with the RESULT-TAKEN, i.e., the result of the validity or the invalidity of the decided branch differs from the prediction (step S48). When the result of the validity or the invalidity of the decided branch differs from the prediction in step S48 (YES), the first GHR 101 is updated with a value "1abcde" of the updated second GHR 202 (step S49). Then, the processes of steps S37 and S38 are executed. When the result of the validity or the invalidity of the decided branch is identical with the prediction in step S48 (NO), the process of step S39 is executed. The determination of step S45 is realized by the determination circuit 203 in FIG. 7, and the determination of step S48 is realized by the comparison circuit 205 in FIG. 7.

When the branch instruction address BIAR does not step over the boundary of 32 Bytes in step S45 (NO), and the RESULT-TAKEN is "1", the second GHR 202 is updated to "1bcdef" (step S50). Then, the branch history update unit 24 determines whether the PREDICT-TAKEN is in disagreement with the RESULT-TAKEN, i.e., the result of the validity or the invalidity of the decided branch differs from the prediction (step S51). When the result of the validity or the invalidity of the decided branch differs from the prediction in step S51 (YES), the first GHR 101 is updated with a value "1bcdef" of the updated second GHR 202 (step S52). Then, the processes of steps S37 and S38 are executed. When the result of the validity or the invalidity of the decided branch is identical with the prediction in step S51 (NO), the process of step S39 is executed. The determination of step S45 is realized by the determination circuit 203 in FIG. 7, and the determination of step S51 is realized by the comparison circuit 205 in FIG. 7.

When the branch instruction address BIAR steps over the boundary of 32 Bytes in step S46 (YES), and the RESULT-TAKEN is "0", the second GHR 202 is updated to "0abcde" (step S53). Then, the branch history update unit 24 determines whether the PREDICT-TAKEN is in disagreement with the RESULT-TAKEN, i.e., the result of the validity or the invalidity of the decided branch differs from the prediction (step S54). When the result of the validity or the invalidity of the decided branch differs from the prediction in step S54 (YES), the first GHR 101 is updated with a value "0abcde" of the updated second GHR 202 (step S55). Then, the processes of steps S37 and S38 are executed. When the result of the validity or the invalidity of the decided branch is identical with the prediction in step S54 (NO), the process of step S39 is executed. The determination of step S46 is realized by the determination circuit 203 in FIG. 7, and the determination of step S54 is realized by the comparison circuit 205 in FIG. 7.

When the branch instruction address BIAR does not step over the boundary of 32 Bytes in step S46 (NO), and the RESULT-TAKEN is "0", the second GHR 202 is updated to "abcdef" (step S56). In this case, since the second GHR 202 is updated to the logical addition of the latest information of the second GHR 202 and the RESULT-TAKEN, the second GHR 202 is not changed from a state before being updated. Then, the branch history update unit 24 determines whether the PREDICT-TAKEN is in disagreement with the RESULT-TAKEN, i.e., the result of the validity or the invalidity of the decided branch differs from the prediction (step S57). When the result of the validity or the invalidity of the decided branch differs from the prediction in step S57 (YES), the first GHR 101 is updated with a value "abcdef" of the updated second GHR 202 (step S58). Then, the processes of steps S37 and S38 are executed. When the result of the validity or the invalidity of the decided branch is identical with the prediction in step S57 (NO), the process of step S39 is executed. The determination of step S46 is realized by the determination circuit 203 in FIG. 7, and the determination of step S57 is realized by the comparison circuit 205 in FIG. 7.

As described above, according to the present embodiment, each of the CPUs 2A and 2B as a processor implements the first GHR 101 that indicates, in time series, results which have predicted the validity or the invalidity of the branches when the instructions are fetched, in addition to the second GHR 202 that indicates, in time series, results which have decided the validity or the invalidity of the branches when computation has been completed. When the instructions are fetched, the branch prediction unit 12 executes branch prediction by using a branch validity accuracy which are decided based on not only the branch history (BRHIS 102) but also the first GHR 101 and indicates whether the instruction is a branch direction as expected. Thereby, while at least branch prediction is succeeding, a gap between the first GHR 101 and the branch prediction can be eliminated, and the branch prediction can be executed quickly with high precision.

Since the first GHR 101 is not correctly updated when the branch prediction has failed, the branch prediction after the failure is not executed correctly. Therefore, when it is decided that the branch prediction has failed based on the result of the branch computation, the branch history update unit 24 copies the value of the second GHR 202 to the first GHR 101. When the branch prediction has failed, the branch controller 21 cancels all processing of instructions subsequent to the instruction which is the target of the branch prediction (i.e., all processing of instructions based on the first GHR 101 after the gap occurs is discarded). Then, the instruction fetch controller 11 redoes the instruction fetch again from a right address based on the result of the branch computation. Since the first GHR 101 is updated to a value after the branch decision at the time of the second instruction fetch, the branch prediction can be executed with high precision.

### EXPLANATION OF REFERENCES

1 information processing device, 2A, 2B CPU, 3A,3B main memory, 11 instruction fetch controller, 12 branch prediction unit, 13 primary instruction cache, 14 secondary cache, 15 memory controller, 16 instruction buffer, 17 instruction decoder, 18 instruction issue controller, 19 primary operand cache, 20 arithmetic unit, 21 branch controller, 22 register, 23 instruction completion controller, 24 branch history updating unit

## Claims

1. A processor **characterized by** comprising:
an execution means that decides an instruction fetch address and executes instruction fetch;
a branch prediction means including:
a first global history register that holds information indicating, in time series, results which have predicted validity or invalidity of branches when instructions have been fetched;
a branch history table that holds a branch target address and classification information of a branch instruction whose branch was valid in the past, as an entry;
a pattern history table that holds a branch validity accuracy as an entry, the branch validity accuracy indicating whether an instruction corresponding to the instruction fetch address is a branch direction as expected; and
a predictor that executes the branch prediction of the instruction corresponding to the instruction fetch address based on classification information and the branch validity accuracy, the classification information being searched with the instruction fetch address as an index, from the branch history table, and the branch validity accuracy being searched with information on the instruction fetch address and the first global history register as an index, from the pattern history table; and
an update means that includes a second global history register that holds information indicating, in time series, results which have decided validity or invalidity of branches when branch computation has been completed, the update means updating the first global history register with information of the second global history register when it is decided that the branch prediction by the predictor has failed based on the result of the branch computation;
wherein the execution means re-executes the instruction fetch after the first global history register is updated.

2. The processor as claimed in claim 1, **characterized in that** the second global history register is updated in units of a plurality of instructions which the execution means has fetched at a time when the branch computation of a conditional branch instruction has been completed.

3. The processor as claimed in claim 2, **characterized in that** when the branch computation of a conditional branch instruction has been completed, the second global history register is updated based on information indicating whether an address of the branch instruction steps over a boundary of a size of data which the execution means fetches at a time and information indicating that the validity or the invalidity of the branch has been decided.

4. A control method of a processor that includes: a first global history register that holds information indicating, in time series, results which have predicted validity or invalidity of branches when instructions have been fetched; a branch history table that holds a branch target address and classification information of a branch instruction whose branch was valid in the past, as an entry; a pattern history table that holds a branch validity accuracy as an entry, the branch validity accuracy indicating whether an instruction corresponding to an instruction fetch address is a branch direction as expected; and a second global history register that holds information indicating, in time series, results which have decided validity or invalidity of branches when branch computation has been completed, the control method **characterized by** comprising:
a first step that decides the instruction fetch address and executes instruction fetch;
a second step that executes the branch prediction of the instruction corresponding to the instruction fetch address based on classification information and the branch validity accuracy, the classification information being searched with the instruction fetch address as an index, from the branch history table, and the branch validity accuracy being searched with information on the instruction fetch address and the first global history register as an index, from the pattern history table;
a third step that updates the first global history register with information of the second global history register when it is decided that the branch prediction by the second step has failed based on the result of the branch computation; and
a fourth step that re-executes the instruction fetch after the first global history register is updated.

5. An information processing device **characterized by** comprising:
a processor; and
a memory that is connected to the processor, the memory storing data corresponding to an instruction fetch address fetched by the processor;
the processor including:
an execution means that decides the instruction fetch address and executes instruction fetch;
a branch prediction means including:
a first global history register that holds information indicating, in time series, results which have predicted validity or invalidity of branches when instructions have been fetched;
a branch history table that holds a branch target address and classification information of a branch instruction whose branch was valid in the past, as an entry;
a pattern history table that holds a branch validity accuracy as an entry, the branch validity accuracy indicating whether an instruction corresponding to the instruction fetch address is a branch direction as expected; and
a predictor that executes the branch prediction of the instruction corresponding to the instruction fetch address based on classification information and the branch validity accuracy, the classification information being searched with the instruction fetch address as an index, from the branch history table, and the branch validity accuracy being searched with information on the instruction fetch address and the first global history register as an index, from the pattern history table; and
a branch computation means that reads out the data from the memory and executes branch computation;
an update means that includes a second global history register that holds information indicating, in time series, results which have decided validity or invalidity of branches when branch computation has been completed, the update means updating the first global history register with information of the second global history register when it is decided that the branch prediction by the predictor has failed based on the result of the branch computation by the computation unit;
wherein the execution means re-executes the instruction fetch after the first global history register is updated.
